# EUROPÄISCHE PATENTSCHRIFT

(11) **EP 3 436 782 B1**
(45) Veröffentlichungstag und Bekanntmachung des Hinweises auf die Patenterteilung: **08.04.2020**
(21) Anmeldenummer: 17726936.2
(22) Anmeldetag: 30.05.2017
(51) Int. Cl.: G01C 21/32, G01C 21/36, G06K 9/00, G08G 1/0962, G08G 1/01

(54) **AKTUALISIERUNG EINER ELEKTRONISCHEN LANDKARTE**
UPDATING AN ELECTRONIC MAP
PROCÉDÉ DE MISE À JOUR D'UNE CARTE GÉOGRAPHIQUE ÉLECTRONIQUE

(30) Priorität: 01.07.2016 DE 102016008175
(43) Veröffentlichungstag der Anmeldung: 06.02.2019
(73) Patentinhaber: Audi AG, 85045 Ingolstadt (DE)
(72) Erfinder: KUBERTSCHAK, Tim, 85055 Ingolstadt (DE)
(86) Internationale Anmeldenummer: PCT/EP2017/063051
(87) Internationale Veröffentlichungsnummer: WO 2018/001670

(56) Entgegenhaltungen:
- DE-A1- 19 842 176
- US-A1- 2015 266 471

## Beschreibung

Die Erfindung betrifft ein Verfahren zum Aktualisieren einer elektronischen Landkarte, mit einem Erfassen von zumindest einem ersten Objekt mittels einer Sensoreinrichtung eines Kraftfahrzeugs, sowie mit einem Zuordnen einer mittels einer Positionserfassungseinrichtung des Kraftfahrzeugs erfassten Position des Kraftfahrzeugs zum erfassten Objekt und mit einem Erzeugen eines ersten Objektdatensatzes, welcher das erfasste erste Objekt und die dem ersten Objekt zugeordnete Position repräsentiert. Die Erfindung betrifft auch ein System zum Aktualisieren einer elektronischen Landkarte, mit einer Flotte von Kraftfahrzeugen sowie einer zentralen fahrzeugexternen Recheneinrichtung, wobei die Kraftfahrzeuge ausgelegt sind, durch eine Positionserfassungseinrichtung des jeweiligen Kraftfahrzeugs eine Position des jeweiligen Kraftfahrzeugs zu erfassen und durch eine Sensoreinrichtung des jeweiligen Kraftfahrzeugs zumindest ein jeweiliges erstes Objekt zu erfassen, um dabei die erfasste Position dem jeweiligen ersten Objekt zuzuordnen, sowie durch eine Auswerteeinrichtung des jeweiligen Kraftfahrzeugs einen jeweiligen ersten Objektdatensatz zu erzeugen, welcher das jeweilige erfasste erste Objekt und die dem jeweiligen erfassten ersten Objekt zugeordnete Position repräsentiert.

Die derzeit für eine Navigation oder für ein hoch- beziehungsweise vollautomatisches Fahren genutzten hochgenauen elektronischen Landkarten werden üblicherweise durch das Abfahren von Strecken mit speziellen Fahrzeugen erzeugt. Diese Fahrzeuge führen dabei eine hochgenaue und teure Messtechnik mit sich, um die jeweilige Straße exakt zu vermessen und die Kartendaten der elektronischen Landkarte zu aktualisieren und dabei beispielsweise neue Objekte zu der Landkarte hinzuzufügen oder auf der Landkarte bestehende Objekte, also bereits auf der Landkarte durch Kartendaten repräsentierte Objekte, zu entfernen. Außerdem ist es notwendig, bestimmte von den Fahrzeugen erfasste Ereignisse wie beispielsweise das Auftreten von Verkehrszeichen oder Bereichen mit einer Verkehrsvorschrift, zum Beispiel einer Geschwindigkeitsbegrenzung, in der Landkarte zu hinterlegen beziehungsweise die entsprechenden Bereiche, in denen beispielsweise die Geschwindigkeitsbegrenzung gültig ist, zu markieren. Da jede Straße explizit befahren werden muss, sind die schließlich zur Verfügung stehenden Daten nicht sehr aktuell. Häufig haben sie ein Alter von ein bis zwei Jahren. Dieser Zeitraum lässt sich durch einen Crowdsourcing-Ansatz verringern, das heißt durch den Einsatz vieler verschiedener Kraftfahrzeuge, welche nicht zwingend mit der oben genannten teuren Spezialhardware ausgestattet sein müssen. Beispielsweise können so Straßen in eine Landkarte aufgenommen werden, falls eine bestimmte Anzahl von Fahrzeugen die Straße befahren hat oder befährt.

So offenbart beispielsweise die FR 293 12 30 A1 ein automatisches Aktualisierungssystem für Kartendaten eines Kraftfahrzeugs, bei welchem das Navigationssystem eines Fahrzeugs aus Standortdaten ermittelt, ob eine Straße oder eine Spur einer Straße befahrbar ist und sendet automatisch Korrekturdaten an einen Server, welcher die Korrekturdaten weiterverteilt, sofern tatsächliche Straßen- oder Spurdaten von den Kartendaten abweichen.

In diesem Zusammenhang offenbart auch die EP 2327961 A2 ein Verfahren zum Erzeugen einer verbesserten Landkarte für ein Fahrzeugnavigationssystem, bei welchem ein Endnutzer Korrekturdaten eingibt und diese an einen Server übermittelt werden, durch welchen weitere Kartendaten aktualisiert werden können.

Auch die WO 2008/005952 A2 offenbart ein System zum Sammeln von Korrekturanforderungen für Kartendaten, bei welchem eine nutzerseitige, manuelle Korrektur von Kartendaten auf einem mobilen Endgerät genutzt werden kann, um Kartendaten auf einem Server zu aktualisieren.

Die DE 10 2012 220 158 A1 beschreibt ein Verfahren zur Aktualisierung von Kartendaten, bei welchen von einem Kraftfahrzeug an verschiedenen Positionen ein entsprechender positionsbezogener Hinweis, beispielsweise ein Hinweis auf ein seitens des Kraftfahrzeugs bestimmtes Verkehrszeichen, an eine zentrale Recheneinrichtung übermittelt wird. Dabei wird ein entsprechender, anderweitig bestimmter Hinweis auf Basis des empfangenen Hinweises überprüft und entschieden, ob der empfangene Hinweis des Kraftfahrzeugs auf ein tatsächlich bestehendes Objekt, beispielsweise das entsprechende Verkehrszeichen, schließen lässt oder nicht.

Dokument US 2015/266471 A1 beschreibt ein Verfahren zur Erkennung von Baustellen anhand der Erfassung typischer Objekte, Verkehrszeichen und einem typischen Fahrverhalten des Verkehrs. Dies erfolgt beispielsweise mittels eines Laserscanners (LIDAR) und aus Kamerabildern. Die Erkennung dieser Merkmale kann in einer Ausprägung mit einer digitalen Karte abgeglichen werden. Bei einem Fehlen dieser Informationen kann die Karte aktualisiert und für andere Verkehrsteilnehmer bereitgestellt werden. Die Ableitung der Baustelle erfolgt aus direkt messbaren Objekten der Baustelle.

Dokument DE 198 42 176 A1 beschreibt ein Verfahren und eine Vorrichtung zur Verkehrszeichenerkennung Navigation. Vorgeschlagen, dass ein gekoppeltes System eine Einrichtung zur Verkehrszeichenerkennung umfasst, die über Datenaustauschleitungen mit einer Einrichtung zur Navigation gekoppelt ist. Die Verkehrszeichenerkennung erfolgt über Fahrzeugumfeld. Die Einrichtung zu Verkehrszeichenerkennung ist dazu eingerichtet, Verkehrszeichenerkennungsdaten bereitzustellen. Die Einrichtung zur Navigation ist dazu eingerichtet, Navigationsdaten bereitzustellen, wobei in einem Speicher digitale Straßenkarten abgelegt sein können. Durch eine Kopplung zwischen Verkehrszeichenerkennung und Navigationssystem kann die Relevanz der durch die Einrichtung zur Verkehrszeichenerkennung erkannten Verkehrszeichen bewertet werden. Es ist auch eine umgekehrte Reihenfolge möglich, wobei durch die Verkehrszeichenerkennung Daten an die Navigationseinrichtung übermittelt werden. Wird eine Abweichung festgestellt, kann ein Warnsignal ausgegeben werden.

Es ergibt sich die Aufgabe, das Aktualisieren einer elektronischen Landkarte zu verbessern.

Diese Aufgabe wird durch die Gegenstände der unabhängigen Patentansprüche 1 und 11 gelöst. Vorteilhafte Ausführungsformen ergeben sich aus den abhängigen Patentansprüchen, der Beschreibung und den Figuren.

Die Erfindung betrifft ein Verfahren zum Aktualisieren einer elektronischen Landkarte mit einer Reihe von Schritten. Ein Schritt ist dabei ein Erfassen von zumindest einem ersten Objekt, beispielsweise einem Wegweiser, mittels einer Sensoreinrichtung eines Kraftfahrzeugs sowie ein Zuordnen einer mittels einer Positionserfassungseinrichtung des Kraftfahrzeugs erfassten Position des Kraftfahrzeugs zum erfassten ersten Objekt. Dabei kann auch aus den Daten der Sensoreinrichtung und der erfassten Position eine Position des erfassten ersten Objektes selber, beispielsweise des Wegweisers selber, berechnet oder erzeugt werden und diese im Folgenden statt der erfassten Position des Kraftfahrzeugs oder ergänzend zu dieser genutzt, d.h. dem ersten Objekt zugeordnet werden. Im Folgenden kann also insbesondere unter der Position des Kraftfahrzeugs auch die entsprechende Position des ersten Objektes verstanden werden. Ein weiterer Schritt ist das Erzeugen eines ersten Objektdatensatzes, welcher das erfasste erste Objekt und die dem ersten Objekt zugeordnete Position, also die Position des Kraftfahrzeugs und/oder die Position des Objektes, repräsentiert. Dies erfolgt fahrzeugintern mittels einer Auswerteeinrichtung des Kraftfahrzeugs.

Ein weiterer Schritt ist das Ableiten eines zweiten Objektdatensatzes, welcher ein von dem erfassten ersten Objekt verschiedenes fahrzeugexternes zweites Objekt repräsentiert aus dem ersten Objektdatensatz. So kann in dem Beispiel des Wegweisers als erstes Objekt auf eine dem Wegweiser zugeordnete Straße als zweites Objekt in der Nähe der dem ersten Objekt zugeordneten Position geschlossen werden. Der zweite Objektdatensatz kann dabei insbesondere eine Eigenschaft und/oder eine Position des zweiten Objektes repräsentieren. So kann beispielsweise aus der normierten Farbgebung des Wegweisers ein Rückschluss auf die Straßenklasse, also die Ausbaustufe der Straße als Eigenschaft des zweiten Objektes getroffen werden. Zum Beispiels kann auch aus einer Entfernungsangabe auf dem Wegweiser ein Rückschluss auf eine Länge der Straße getroffen werden und/oder aus einer Ortsangabe auf dem Wegweiser ein Endpunkt und/oder eine Richtung der Straße. Das Ableiten des zweiten Objektdatensatzes kann dabei entweder fahrzeugintern durch die Auswerteeinrichtung des Kraftfahrzeugs oder fahrzeugextern erfolgen, beispielsweise durch eine zentrale Recheneinrichtung. Schließlich ist ein weiterer Schritt das Aktualisieren der elektronischen Landkarte durch ein Hinzufügen von Kartendaten, welche dem zweiten Objektdatensatz entsprechen, zu der Landkarte mittels einer Recheneinrichtung, insbesondere der zentralen Recheneinrichtung. Zusätzlich kann das Aktualisieren erfolgen durch Entfernen von Kartendaten, welche dem zweiten Objektdatensatz widersprechenden, von der Landkarte mittels der Recheneinrichtung, insbesondere der zentralen Recheneinrichtung. Die aktualisierte Landkarte kann dann insbesondere zur Nutzung bereitgestellt werden, insbesondere auch an weitere Nutzer und/oder Kraftfahrzeuge.

Das hat den Vorteil, dass bei dem Aktualisieren auch selten oder nicht befahrene Straßen berücksichtigt werden. Auch neue Landmarken, beispielsweise Sehenswürdigkeiten, Tankstellen und dergleichen, welche noch nicht in der Landkarte hinterlegt sind, können so in die Karte aufgenommen werden. Dies wird dadurch ermöglicht, dass die jeweils interessanten Eigenschaften, Infrastrukturelemente oder fahrzeugexternen Objekte nicht direkt durch das Kraftfahrzeug wahrgenommen oder erfasst werden, sondern indirekt durch Infrastrukturelemente oder sonstige Objekte im Umfeld des Kraftfahrzeugs, welches durch fahrzeuginterne Sensoreinrichtungen überwacht werden kann. Die Infrastrukturelemente und sonstigen Objekte, also die ersten Objekte im Sinne der Erfindung, deuten lediglich auf das Vorhandensein der neuen Straßen oder Landmarken hin. Damit können insbesondere auch zweite Objekte wie unbekannte Straßen in die elektronische Landkarte aufgenommen werden, welche noch nicht in der elektronischen Landkarte hinterlegt sind. Derartige Straßen würden sonst spätestens, sobald autonom fahrende Fahrzeuge flächendeckend verfügbar sind, gar nicht mehr verwendet, da sie nicht auf der Landkarte hinterlegt und somit für eine automatische Streckenführung unbekannt sind. Durch das Auswerten der indirekten Information wird somit gleichsam ein Erfassungsbereich der Sensoreinrichtung des jeweiligen Kraftfahrzeugs über den tatsächlichen physikalischen Erfassungsbereich der jeweiligen Sensoren hin räumlich ausgeweitet.

Dabei repräsentiert der zweite Objektdatensatz zumindest eine Eigenschaft des zweiten Objekts, welche einem Erfassen oder Messen durch das Kraftfahrzeug oder eine weitere Sensoreinrichtung des Kraftfahrzeugs unzugänglich ist. Die Eigenschaft kann also beispielsweise für den oben genannten Wegweiser eine Entfernung eines Ortes sein, welcher sich außerhalb einer Sensorreichweite des Kraftfahrzeugs befindet, oder auch ein Vorhandensein einer Straße, welche durch das Kraftfahrzeug nicht befahren wird, und/oder eine Straßenklasse einer solchen, nicht befahrenen Straße. Durch das Ableiten des zweiten Objektdatensatzes wird somit eine virtuelle Reichweite der Sensoren des Kraftfahrzeugs erreicht, welche größer ist als eine physikalische Reichweite. Auch Messgrößen, welche durch ein direktes Messen nur schwer zugänglich sind, beispielsweise eine Straßenklasse, werden dem Kraftfahrzeug zugänglich gemacht. Somit wird die Aktualität und Relevanz der Kartendaten erhöht.

In einer weiteren Ausführungsform ist vorgesehen, dass die Recheneinrichtung eine fahrzeugexterne Recheneinrichtung ist und vor dem Aktualisieren ein Übermitteln des ersten und/oder des zweiten Objektdatensatzes durch das Kraftfahrzeug an die fahrzeugexterne Recheneinrichtung erfolgt. Insbesondere können mit dem Objektdatensatz auch verarbeitungsbezogene Daten übermittelt werden. Die verarbeitungsbezogenen Daten können weitere, für die Verarbeitung des Objektdatensatzes oder der Objektdatensätze in der fahrzeugexternen Recheneinrichtung nützliche oder erforderliche Daten umfassen, insbesondere für das unten genannte Überprüfen auf eine Übereinstimmung nützliche oder erforderliche Daten. Die verarbeitungsbezogenen Daten können beispielsweise Messunsicherheiten und/oder Existenzwahrscheinlichkeiten umfassen. Messunsicherheiten und/oder Existenzwahrscheinlichkeiten sind bei dem unten genannten Erkennen einer Übereinstimmung bei dem Überprüfen mittels eines Bayesschen Netzes erforderlich, um zuverlässige Ergebnisse zu erreichen.

Das hat den Vorteil, dass ein gegebenenfalls rechenintensives Aktualisieren der elektronischen Landkarte, welches ein Erzeugen von dem zweiten Objektdatensatz entsprechenden Kartendaten erfordert, nicht im Kraftfahrzeug, sondern durch eine rechenstarke zentrale Recheneinrichtung, beispielsweise einen Backend-Server, erfolgen kann. Entsprechend können jeweils genutzte Algorithmen auch ohne großen Aufwand aktualisiert und verbessert werden sowie eine zentral hinterlegte elektronische Landkarte aktualisiert werden. Dabei können auch die Objektdatensätze aus mehreren unterschiedlichen Kraftfahrzeugen berücksichtigt werden oder die aktualisierte Landkarte kann aufwandsarm auch mehreren Kraftfahrzeugen zur Verfügung gestellt werden. Dadurch wird das System besonders attraktiv, da die fortlaufend aktualisierte Landkarte einer Allgemeinheit zugänglich gemacht werden kann.

In einer besonders vorteilhaften Ausführungsform erfolgt das Erfassen und Erzeugen wiederholt. Insbesondere erfolgt auch das Übermitteln des jeweiligen Objektdatensatzes wiederholt. Erfassen und Erzeugen (sowie gegebenenfalls Übermitteln) betreffen dabei jeweils erneut eine Position sowie ein erstes Objekt (sowie gegebenenfalls entsprechend einen ersten und/oder zweiten Objektdatensatz), und zwar durch das eine Kraftfahrzeug und/oder ein weiteres Kraftfahrzeug. Das Erfassen und/oder Erzeugen und/oder Übermitteln kann insbesondere auch die oben genannten und/oder weitere verarbeitungsbezogenen Daten betreffen. Die Position und/oder das erste Objekt können dabei entweder die eine und/oder eine weitere Position beziehungsweise das eine und/oder ein anderes erstes Objekt sein. Es kann also beispielsweise das eine Kraftfahrzeug wiederholt an einer Position mit einem gleichen ersten Objekt, beispielsweise dem genannten Wegweiser, vorbeifahren und dieses erfassen und entsprechend die weiteren Verfahrensschritte durchführen oder das eine Fahrzeug weitere Positionen mit weiteren ersten Objekten erfassen. Es kann aber auch ein weiteres Fahrzeug das bereits von dem einen Kraftfahrzeug erfasste erste Objekt sowie die zugeordnete Position, zum Beispiel den Wegweiser an derselben Position, erfassen oder aber auch weitere erste Objekte mit entsprechenden Positionen. Insbesondere erfolgt hier auch das Ableiten des zweiten Objektdatensatzes wiederholt. Bei dem einen Kraftfahrzeug und/oder dem weiteren Kraftfahrzeug kann es sich entsprechend um Kraftfahrzeug einer Kraftfahrzeug- oder Fahrzeugflotte handeln.

Das hat den Vorteil, dass die Stärken des oben beschriebenen indirekten Ansatzes zur Kartierung besonders ausgeprägt sind. So wird für das Aktualisieren ein Crowdsourcing-Ansatz verwendet, bei welchem die Stärken des oben beschriebenen indirekten Ansatzes besonders vorteilhaft sind. So wird die Karte unter Berücksichtigung einer Vielzahl von Hinweisen, nämlich Objektdatensätzen, vieler unterschiedlicher Kraftfahrzeuge abgeleitet, sodass auch seltener befahrene Straßen oder passierte Verkehrsschilder ausgewertet und berücksichtigt werden können. Aus den statistischen Eigenschaften derart großer Mengen von Objektdatensätzen ergibt sich eine besonders große Genauigkeit und Fehlertoleranz. Damit ist die Aktualität der Landkarte besonders groß und eine fortlaufende Vervollständigung der Landkarte erreicht. Überdies sinken auch die Kosten für die Kartierung, da speziell ausgestattete Kraftfahrzeuge zur Kartierung nicht mehr oder zumindest in einer geringeren Anzahl benötigt werden, um die elektronische Landkarte für eine Vielzahl von Nutzern zugänglich aktuell zu halten.

Dadurch, dass die aktualisierte Landkarte durch die zentrale Recheneinheit auch anderen Kraftfahrzeugen zur Verfügung gestellt wird, kann die elektronische Landkarte auch gezielt weiter vervollständig werden, indem beispielsweise ein Infrastrukturelement wie eine neu hinzugefügte Straße gezielt durch eine Routenführung berücksichtigt wird, beispielsweise bei einem pilotiertem Fahren befahren oder in einer Routenführung empfohlen wird, um weitere, genauere Daten über das Infrastrukturelement erheben zu können.

In einer besonders vorteilhaften Ausführungsform kann hier vorgesehen sein, dass vor dem Aktualisieren der Landkarte ein Überprüfen der jeweiligen ersten und/oder der jeweiligen zweiten Objektdatensätze durch die Recheneinrichtung auf eine Übereinstimmung in den jeweiligen ersten und/oder in den jeweiligen zweiten Objektdatensätzen erfolgt und das Aktualisieren nur erfolgt, wenn eine Übereinstimmung erkannt wird. Es werden also jeweils vor dem Aktualisieren durch die Recheneinheit entweder die unterschiedlichen ersten oder die unterschiedlichen zweiten Objektdatensätze überprüft. Aktualisiert wird die Landkarte nur, wenn eine Information des einen überprüften ersten (oder zweiten) Objektdatensatzes mit einer Information des anderen überprüften ersten (oder zweiten) Objektdatensatzes übereinstimmt. Das hat den Vorteil, dass eine Zuverlässigkeit und Genauigkeit der Karten erhöht wird und Hinweise oder Kartendaten nur in die elektronische Landkarte übernommen werden, wenn sie eine bestimmte Zuverlässigkeit erreichen und beispielsweise nicht nur durch einen einmalig auftretenden Mess- oder Interpretationsfehler zustande gekommen sind.

Dabei kann vorgesehen sein, dass bei dem Überprüfen von zwei Objektdatensätzen eine Übereinstimmung erkannt wird, und insbesondere nur erkannt wird, falls die Objektdatensätze sich auf das gleiche fahrzeugexterne Objekt beziehen. Beispielsweise kann so eine Übereinstimmung erkannt werden, wenn zwei Wegweiser, welche sich an unterschiedlichen Orten befinden und sich dabei auf beispielsweise eine Straße oder eine Landmarke als gemeinsames Objekt beziehen, als Objektdatensätze mit einer Übereinstimmung erkannt werden. So kann beispielsweise für die Objektdatensätze eines ersten Wegweisers an Ort A, welcher den Weg zu Ort B weist, und eines zweiten Wegweisers an Ort B, welcher den Weg zu Ort A weist, eine Übereinstimmung erkannt werden. Auch für zwei Objektdatensätze, welche beispielsweise bei einem wiederholten Vorbeifahren an einem bestimmten Wegweiser als das gleiche fahrzeugexterne Objekt erzeugt oder abgeleitet werden, kann so eine Übereinstimmung erkannt werden. Das hat den Vorteil, dass auf verhältnismäßig einfache Weise eine Übereinstimmung überprüft werden kann und somit die Qualität, also Zuverlässigkeit und Genauigkeit, der Kartendaten erhöht wird.

In einer anderen, besonders vorteilhaften Ausführungsform ist vorgesehen, dass für das Erkennen der Übereinstimmung bei dem Überprüfen ein neuronales Netz oder ein Bayes'sches Netz oder weitere Erkennungsverfahren aus dem Bereich der künstlichen Intelligenz genutzt werden. Insbesondere kann hier auch ein Schließen nach den Gesetzen der Logik genutzt werden. Es können hier auch probabilistische Methoden zum Einsatz kommen, da viele der Informationen, also der Objektdatensätze, welche von den Fahrzeugen erfasst beziehungsweise erzeugt oder abgeleitet werden, mit einer statistischen Unsicherheit behaftet sind. Gerade neuronale oder bayessche Netze sind hier besonders geeignet, um zuverlässige Informationen aus einer Vielzahl von Objektdatensätzen auszufiltern und entsprechend die Landkarte mit einer besonders großen Genauigkeit und Aktualität zu aktualisieren.

In einer besonders vorteilhaften Ausführungsform kann dabei vorgesehen sein, dass das Aktualisieren der Landkarte nur erfolgt, falls bei dem Überprüfen für eine vorgegebene Mindestanzahl von Objektdatensätzen und/oder für Objektdatensätze einer vorgegebenen Mindestanzahl von unterschiedlichen Kraftfahrzeugen eine Übereinstimmung erkannt wird. Dies ist statistisch besonders günstig, sodass die Zuverlässigkeit der Landkarte erhöht werden kann. Über das Vorgeben der jeweiligen Mindestanzahl kann so eine vorgeschriebene Güte der Landkarte erreicht werden.

In einer anderen besonders vorteilhaften Ausführungsform kann dabei vorgesehen sein, dass die Objektdatensätze auch einen jeweiligen Erfassungszeitpunkt des ersten Objekts repräsentieren und das Aktualisieren der Landkarte nur erfolgt, falls bei dem Überprüfen für eine vorgegebene Mindestanzahl von Objektdatensätzen mit Erfassungszeitpunkten in einem vorgegebenen Zeitintervall und/oder für Objektdatensätze mit Erfassungszeitpunkten in einem vorgegebenen Zeitintervall einer vorgegebenen Mindestanzahl von unterschiedlichen Kraftfahrzeugen eine Übereinstimmung erkannt wird. Das hat den Vorteil, dass Veränderungen, wie beispielsweise neue Straßen oder neue Landmarken, in einer Umgebung besonders schnell detektiert und auf ihre Zuverlässigkeit hin überprüft werden können. Somit kann beispielsweise eine statistische Signifikanz und damit Zuverlässigkeit eines Objektdatensatzes beziehungsweise einer der dem Objektdatensatz zugrundeliegenden Information besser überprüft werden und somit die Landkarte schneller an Veränderungen angepasst werden.

In einer anderen Ausführungsform ist vorgesehen, dass das jeweilige Erfassen und Erzeugen, insbesondere auch das Ableiten und/oder Übermitteln, automatisch und insbesondere auch fortlaufend erfolgt. Das hat den Vorteil, dass die Landkarte ständig aktuell gehalten wird und es überdies auch seitens eines Fahrer des Kraftfahrzeugs keiner Aktivität bedarf.

In einer vorteilhaften Ausführungsform ist dabei vorgesehen, dass, falls als das erste Objekt ein als Wegweiser und/oder Hinweisschild ausgeführtes Straßenschild erfasst wird, basierend darauf der zweite Objektdatensatz als das fahrzeugexterne zweite Objekt eine in der elektronischen Landkarte zuvor noch nicht hinterlegte Straße und/oder eine Landmarke repräsentieren und bei dem Aktualisieren als Kartendaten die zuvor noch nicht hinterlegte Straße und/oder Landmarke der elektronischen Landkarte hinzugefügt wird. Statt der Straße und/oder Landmarke kann hier auch allgemein ein Infrastrukturelement repräsentiert und entsprechend der Landkarte in Form von Kartendaten hinzugefügt werden. Falls der erste Objektdatensatz ein Hinweisschild und/oder einen Wegweiser repräsentiert, repräsentiert der zweite Objektdatensatz also vorliegend ein Infrastrukturelement wie beispielsweise eine Straße und/oder eine Landmarke. Die Landmarke kann insbesondere eine Sehenswürdigkeit und/oder einen Parkplatz und/oder eine Tankstelle umfassen. Das hat den Vorteil, dass so neue Verbindungen schnell in der Landkarte aktualisiert werden und die Karte besonders aktuell ist. Überdies kann so auch bei intensivem Nutzen von einer automatischen Routenführung jederzeit der kürzeste Weg zum Ziel gewählt werden, was Zeit und auch einen CO₂-Ausstoß spart.

In einer weiteren Ausführungsform ist vorgesehen, dass, falls als das erste Objekt zumindest ein anderer Verkehrsteilnehmer und/oder ein Verkehrsschild wie zum Beispiel ein Umleitungsschild erfasst wird, basierend darauf der zweite Objektdatensatz als das fahrzeugexterne zweite Objekt ein in der elektronischen Landkarte zuvor noch nicht hinterlegte lokale Eigenschaft einer Straße repräsentiert, insbesondere eine lokale Verkehrsregelung wie zum Beispiel eine Einbahnstraße und/oder ein Gesperrtsein, und/oder eine Straßenklasse. Dabei wird bei dem Aktualisieren als Kartendaten die zuvor noch nicht hinterlegte Eigenschaft der elektronischen Landkarte hinzugefügt und insbesondere bei Bedarf eine der zuvor noch nicht hinterlegten Eigenschaft widersprechende, in der elektronischen Landkarte hinterlegte Eigenschaft entfernt. Falls also der erste Objektdatensatz andere Verkehrsteilnehmer, insbesondere andere Kraftfahrzeuge und/oder ein Verhalten der anderen Verkehrsteilnehmer, und/oder ein Verkehrsschild, beispielsweise ein Umleitungsschild, repräsentiert, repräsentiert der zweite Objektdatensatz eine lokale Eigenschaft einer Straße.

Somit kann beispielsweise ein wiederholtes Erfassen anderer Verkehrsteilnehmer, welche in einer Straße, welche in der elektronischen Landkarte als Einbahnstraße markiert ist, entgegen der Fahrtrichtung der Einbahnstraße fahren, bei einer ausreichenden Güte oder statistischen Qualität dazu führen, dass der entsprechenden Straße in der Landkarte wieder eine Befahrbarkeit in beide Richtungen als Eigenschaft zugeordnet wird und die zuvor hinterlegte Befahrbarkeit ausschließlich in einer Richtung wieder entfernt wird. Das hat den Vorteil, dass gerade kurzfristig geänderte Verkehrsregeln besonders gut erkannt und in die Landkarte eingepflegt werden können.

Gerade bei dem Erkennen einer Umleitung beziehungsweise eines Umleitungsschildes als erstes Objekt kann somit beispielsweise auf eine Baustelle rückgeschlossen werden. Dies ist besonders vorteilhaft, wenn nur eine Fahrtrichtung umgeleitet wird und ansonsten die entsprechende Auswirkung auf den Verkehr nicht oder schwer zu erkennen ist.

In einer anderen vorteilhaften Ausführungsform ist vorgesehen, dass, falls als das erste Objekt ein natürliches Objekt, insbesondere Staub, erfasst wird, basierend darauf der zweite Objektdatensatz als das fahrzeugexterne zweite Objekt eine in der elektronischen Landkarte zuvor noch nicht hinterlegte lokale Eigenschaft einer von dem den ersten Objektdatensatz erfassenden Kraftfahrzeug befahrenen Straße, insbesondere einen Fahr- oder Straßenuntergrund, repräsentiert und bei dem Aktualisieren als Kartendaten die zuvor noch nicht hinterlegte Eigenschaft der elektronischen Landkarte hinzugefügt wird und insbesondere eine der zuvor noch nicht hinterlegten Eigenschaft widersprechende, in der elektronischen Landkarte hinterlegten Eigenschaft entfernt wird. Der Begriff "natürliches Objekt" kann dabei als Gegenteil zu einem menschgemachten Objekt, einem sogenannten "Artefakt", verstanden werden. Als natürliches Objekt kann dabei beispielsweise die Sonne und ein entsprechender Sonnenstand, aus welchem sich eine Blendung und eine Gefährdung als lokale Eigenschaft einer Straße ableiten lassen, dienen. Es können auch allgemein Partikel wie der genannte Staub oder auch Feuchtigkeit, welche als Nebel tropfenförmig in der Luft hängt, erkannt werden, oder sonstige Partikel. Die natürlichen Objekte können auch mittelbar erfasst werden, beispielsweise über ein Auswerten von Reinigungsanweisungen der Scheiben oder von Umfeldsensoren des Kraftfahrzeugs. Beispielsweise kann zum Beispiel auf einen staubigen Untergrund geschlossen werden, falls ein Laserscanner gereinigt werden muss, da dies üblicherweise der Fall ist, wenn Staub eine entsprechende Optik beeinträchtigt. Falls somit der erste Objektdatensatz ein natürliches Objekt repräsentiert, repräsentiert hier der zweite Objektdatensatz eine lokale Eigenschaft einer von dem den ersten Objektdatensatz erfassenden Kraftfahrzeug befahrenen Straße. Zu diesen lokalen Eigenschaften kann beispielsweise auch ein lokales Wetter gehören. Der erste Objektdatensatz kann insbesondere auch einen fahrzeuginternen Parameter, beispielsweise eine Durchschnittsgeschwindigkeit und/oder einen Durchschnittsverbrauch, repräsentieren. In diesem Fall repräsentiert der zweite Objektdatensatz dann insbesondere einen Höhenverlauf der Straße, der sich aus dem Durchschnittsverbrauch und der entsprechenden Geschwindigkeit ableiten lässt, und/oder eine aktuelle Verkehrssituation auf der Straße, welche sich aus einer Geschwindigkeit des Kraftfahrzeugs ableiten lässt. Somit kann beispielsweise ein Stau und/oder eine Geschwindigkeitsbegrenzung als lokale Eigenschaft der befahrenen Straße durch den zweiten Objektdatensatz repräsentiert werden. Gerade diese dynamischen lokalen Eigenschaften, welche sich bereits innerhalb weniger Stunden oder sogar innerhalb von Minuten ändern können, sind für die Nutzer von elektronischen Landkarten heute von besonderem Interesse.

Die erfassten ersten Objekte können insbesondere fahrzeugexterne Objekte sein und/oder aber fahrzeuginterne Objekte oder Parameter, welche von einem fahrzeugexternen zweiten Objekt in vorbekannter, aber durch einen Fahrer des Kraftfahrzeugs nicht beeinflussbarer Weise abhängen. Gerade dies ist bei dem Gewinnen von indirekter Information über eine Umgebung oder ein Umfeld des Kraftfahrzeugs vorteilhaft.

Es kann hier der jeweilige erste Objektdatensatz eine Bedeutungsinformation von einem Schild, insbesondere von einem Verkehrsschild und/oder von einem Hinweisschild und/oder von einem Wegweiser, und/oder eine Bewegungsinformation anderer Verkehrsteilnehmer, insbesondere anderer Kraftfahrzeuge, und/oder eine Verhaltensinformation eines Fahrers des jeweiligen Kraftfahrzeugs und/oder eine Leistungsfähigkeitsinformation eines Sensors der Sensoreinrichtung umfassen.

Es ist laut der Erfindung vorgesehen, dass bei dem Aktualisieren eine noch nicht hinterlegte Landmarke auf der elektronischen Landkarte als Kartendaten, also in Form von Kartendaten, hinzugefügt wird, wobei ein Bestimmten einer Position der noch nicht hinterlegten Landmarke auf der elektronischen Landkarte eine Trilateration unter Berücksichtigung der dem ersten Objekten zugeordneten Positionen umfasst. In einer weiteren vorteilhaften Ausführungsform kann vorgesehen sein, dass, falls bei dem Aktualisieren eine noch nicht hinterlegte Straße der elektronischen Landkarte als Kartendaten, also in Form von Kartendaten, hinzugefügt wird, ein Bestimmten einer Position der noch nicht hinterlegten Straße auf der elektronischen Landkarte ein logisches Ausschließen von für die Straße gemäß dem ersten und/oder zweiten Objektdatensatz unmöglichen Positionen und/oder eine Trilateration unter Berücksichtigung der dem ersten Objekt zugeordneten Position umfasst.

So kann beispielsweise ausgeschlossen werden, dass sich ein Infrastrukturelement wie eine Straße und/oder eine Landmarke in einer Richtung befindet, die der Richtung eines zugeordneten Wegweisers entgegengesetzt orientiert ist. Bei dem logischen Ausschließen kann insbesondere auch auf eine weitere Information über die Umgebung des ersten Objekts zugegriffen werden. Die weitere Information kann dabei sowohl in der Landkarte hinterlegt sein als auch von dem Kraftfahrzeug erfasst worden sein. So kann für die Position eines Wegweisers beispielsweise hinterlegt sein, ob sich dieser an einer Abzweigung und/oder Kreuzung oder an einer Ausfahrt befindet. Da Wegweiser an Ausfahrten oft nur die zu fahrende Richtung vorgeben und nicht eine Himmelsrichtung, in welcher das Infrastrukturelement liegt, kann diese Information das Ergebnis des logischen Ausschließens beeinflussen.

Das hat den Vorteil, dass auf einfache Weise automatisch Eigenschaften und/oder Positionen des Infrastrukturelements, also insbesondere der Straße und/oder der Landmarke, abgeleitet werden können, sodass auch ohne weitere Schritte bereits eine gute Genauigkeit der automatischen Karte erzielt wird.

Die Erfindung betrifft auch ein System zum Aktualisieren einer elektronischen Landkarte, mit einer Flotte von Kraftfahrzeugen sowie einer zentralen fahrzeugexternen Recheneinrichtung. Dabei sind die Kraftfahrzeuge ausgelegt, durch eine Positionserfassungseinrichtung des jeweiligen Kraftfahrzeugs eine Position des jeweiligen Kraftfahrzeugs und durch eine Sensoreinrichtung des jeweiligen Kraftfahrzeugs zumindest ein jeweiliges erstes Objekt zu erfassen, und dabei die jeweilige erfasste Position dem jeweiligen ersten Objekt zuzuordnen, sowie durch eine Auswerteeinrichtung des Kraftfahrzeugs einen jeweiligen ersten Objektdatensatz zu erzeugen, welcher das jeweilige erfasste erste Objekt und die dem jeweiligen ersten Objekt zugeordnete Position repräsentiert.

Dabei sind die Auswerteeinrichtungen der Kraftfahrzeuge oder eine fahrzeugexterne Recheneinrichtung, beispielsweise ein Backendserver, ausgelegt, aus dem ersten Objektdatensatz einen zweiten Objektdatensatz abzuleiten, welcher ein von dem erfassten ersten Objekt verschiedenes fahrzeugexternes zweites Objekt repräsentiert. Die Kraftfahrzeuge sind dabei ausgelegt, den ersten Objektdatensatz und/oder den zweiten Objektdatensatz an die fahrzeugexterne Recheneinrichtung zu übermitteln. Die Recheneinrichtung ist hier ausgelegt, die elektronische Landkarte durch ein Hinzufügen von Kartendaten, welche dem zweiten Objektdatensatz entsprechen, zu der Landkarte oder durch Entfernen von Kartendaten, welche dem zweiten Objektdatensatz entsprechen, von der Landkarte zu aktualisieren.

Vorteile und vorteilhafte Ausführungsformen des Systems entsprechen hier Vorteilen und vorteilhaften Ausführungsformen des Verfahrens und umgekehrt.

Die jeweiligen Sensoreinrichtungen können dabei zumindest einen Umfeldsensor zum Erfassen von einem fahrzeugexternen ersten Objekt umfassen. Beispielsweise kann der Umfeldsensor zum Erfassen von einem Schild, insbesondere von einem Hinweisschild und/oder von einem Wegweiser und/oder von einem Verkehrsschild, und/oder von einem anderen Verkehrsteilnehmer, bevorzugt von einem anderen Kraftfahrzeug, ausgelegt sein. Alternativ oder ergänzend können die jeweiligen Sensoreinrichtungen auch einen Fahrzeugsensor zum Erfassen von dem Fahrer des Kraftfahrzeugs und/oder von einem fahrzeuginternen Parameter des Kraftfahrzeugs, insbesondere von einer Geschwindigkeit und/oder von einem Spritverbrauch und/oder von einer Verschmutzung, beispielsweise einer Verschmutzung einer Frontscheibe und/oder einer Verschmutzung eines Sensors der Sensoreinrichtung, umfassen.

Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind.

Ausführungsbeispiele der Erfindung werden nachfolgend anhand schematischer Zeichnungen näher erläutert. Es zeigen:
- Fig. 1: ein erstes Anwendungsbeispiel, anhand dessen eine beispielhafte Ausführungsform eines Verfahrens zum Aktualisieren einer elektronischen Landkarte erläutert wird;
- Fig. 2: ein zweites Anwendungsbeispiel, anhand dessen eine weitere beispielhafte Ausführungsform eines Verfahrens zum Aktualisieren einer elektronischen Landkarte erläutert wird; und
- Fig. 3: ein drittes Anwendungsbeispiel, anhand dessen eine andere beispielhafte Ausführungsform eines Verfahrens zum Aktualisieren einer elektronischen Landkarte erläutert wird, welches nicht Teil der Erfindung ist.

Gleiche oder funktionsgleiche Elemente werden dabei mit den gleichen Bezugszeichen versehen.

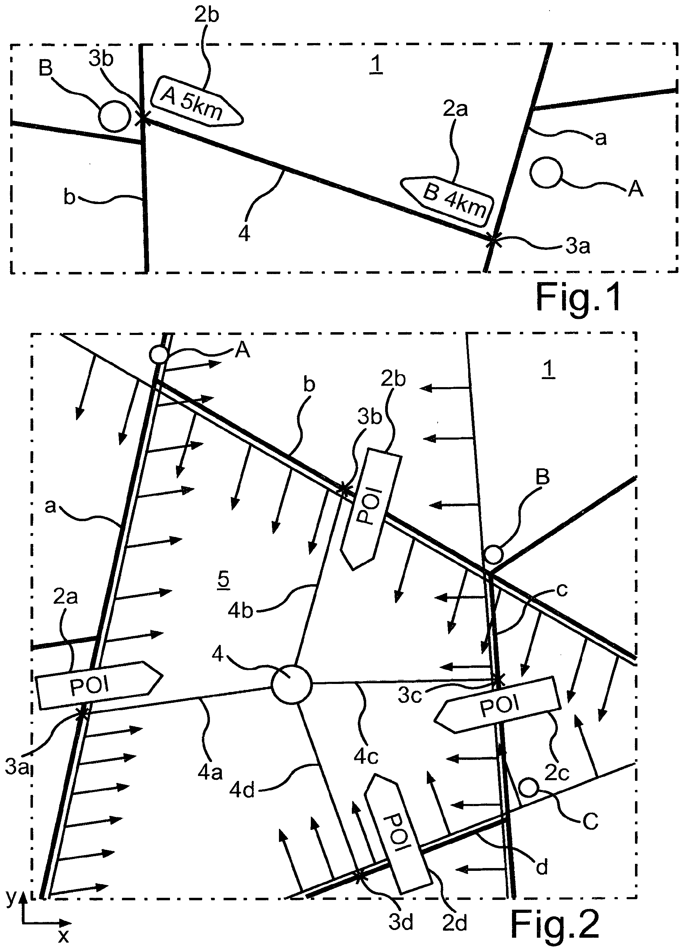

In Fig. 1 ist als Anwendungsbeispiel das Hinzufügen einer neuen Straße zu einer elektronischen Landkarte dargestellt. Die elektronische Landkarte 1 ist hier als Prinzipdarstellung in vereinfachter Weise dargestellt. Ein erstes Objekt 2a wurde vorliegend von einem ersten Kraftfahrzeug an einer Position 3a erfasst. Bei dem ersten Objekt 2a handelt es sich vorliegend um ein als Wegweiser ausgeführtes Schild, welches beispielsweise auch eine Entfernungsangabe umfasst. Das Erfassen kann im vorliegenden Beispiel über eine Kamera des Fahrzeugs als Sensoreinrichtung erfolgt sein. Dem ersten Objekt 2a wird im gezeigten Beispiel die erfasste Position 3a des Kraftfahrzeugs auf einer Straße a zugeordnet und entsprechend ein erster Objektdatensatz erzeugt.

Aus dem ersten Objektdatensatz wird sodann ein zweiter Objektdatensatz abgeleitet. Dieser zweite Objektdatensatz repräsentiert ein von dem ersten Objekt 2a verschiedenes fahrzeugexternes zweites Objekt 4, vorliegend eine Straße. Das erste Kraftfahrzeug kann somit aus dem ersten Objektdatensatz ableiten, dass an der zugeordneten Position 3a als zweites Objekt 4 vorliegend eine Straße abzweigt. Dies setzt auf der Seite des Kraftfahrzeugs die Möglichkeit voraus, das erfasste erste Objekt 2a, hier den Wegweiser, als auf eine Straße hinweisend zu verstehen. Die Straße 4 ist im gezeigten Beispiel noch nicht in der elektronischen Landkarte 1 hinterlegt.

Vorliegend wird ein weiteres erstes Objekt 2b an einer weiteren Position 3b durch ein weiteres Kraftfahrzeug auf der weiteren Straße b erfasst. Wie für das eine erste Objekt 2a wird auch hier aus dem als Wegweiser ausgeführten ersten Objekt 2b ein weiterer erster Objektdatensatz erzeugt, welcher den Wegweiser als erfasstes erstes Objekt 2b nebst der zugeordneten Position 3b repräsentiert. Vorliegend erfolgt in dem weiteren Fahrzeug wieder das Ableiten eines zweiten Objektdatensatzes, welcher die zuvor noch nicht auf der elektronischen Landkarte 1 hinterlegte Straße als zweites Objekt 4 repräsentiert. Das Ableiten des jeweiligen zweiten Objektdatensatzes kann alternativ auch nach einem jeweiligen Übermitteln der ersten Objektdatensätze an eine zentrale fahrzeugexterne Recheneinrichtung durch die Recheneinrichtung erfolgen.

Im gezeigten Beispiel werden die jeweiligen zweiten Objektdatensätze von den beiden Kraftfahrzeugen an eine zentrale Recheneinheit übermittelt, in welcher sie vorliegend auf Übereinstimmungen überprüft werden..

Im gezeigten Beispiel werden also die entsprechenden zweiten Objektdatensätze verglichen. In dem gezeigten Beispiel ist somit in dem einen zweiten Objektdatensatz hinterlegt, dass das zweite Objekt 4 eine Straße ist und hier mit einer ungefähren Länge von im gezeigten Beispiel 4 Kilometer zu einem Ort B führt von der Position 3a. Umgekehrt ist in dem weiteren zweiten Objektdatensatz hinterlegt, dass das zweite Objekt 4 als eine Straße und hier mit einer ungefähren Länge von 5 Kilometern zu dem Ort A hinführt. Überdies ist im gezeigten Beispiel auch durch die Farbgebung der entsprechenden Schilder ersichtlich, dass die Straßenklasse identisch ist.

Da nun die Recheneinheit über mehr Informationen als die beiden, die jeweiligen ersten Objekte 2a, 2b erfassenden, Kraftfahrzeuge verfügt, kann eine interne Logik, welche beispielsweise durch ein neuronales Netz realisiert ist, eine Übereinstimmung in den Objektdatensätzen erkennen. Im gezeigten Beispiel wird so erkannt, dass die Objektdatensätze der beiden Kraftfahrzeuge sich auch das gleiche zweite Objekt 4 in Form einer Straße zwischen den Positionen 3a und 3b beziehen und das zweite Objekt 4 entsprechend in Form von Kartendaten zu der Landkarte 1 hinzugefügt. Schließlich wird die neue, aktualisierte elektronische Landkarte 1 den Kraftfahrzeugen von der Recheneinrichtung zur Verfügung gestellt, sodass das zweite Objekt 4 künftig durch eine Fahrerassistenzeinrichtung der jeweiligen Kraftfahrzeuge, beispielsweise eine Routenführung, oder bei einem teil- oder hoch- oder vollautomatisierten Fahren berücksichtigt werden kann.

In Fig. 2 ist eine Ausführungsform entsprechend der Erfindung zum Aktualisieren einer elektronischen Karte dargestellt. Vorliegend betrifft dies ein Hinzufügen einer Landmarke, eines sogenannten Point-of-Interest (POI) zu der Landkarte 1. Im gezeigten Beispiel wurden nun ähnlich zu dem oben beschriebenen Verfahren durch ein oder mehrere Kraftfahrzeuge verschiedene erste Objekte 2a, 2b, 2c, 2d an unterschiedlichen Straßen a, b, c, d an zugeordneten und erfassten Positionen 3a, 3b, 3c, 3d erfasst. An beziehungsweise auf diesen Straßen befinden sich im gezeigten Beispiel auch drei Orte A, B, C, welche vorliegend jedoch nicht für das Verfahren genutzt werden. Die ersten Objekte 2a, 2b, 2c, 2d sind vorliegend als Hinweisschilder ausgeführt und umfassen einen Hinweis auf ein fahrzeugexternes zweites Objekt 4, die entsprechende Landmarke. Bei dieser kann es sich beispielsweise um eine Sehenswürdigkeit, einen Rastplatz, eine Tankstelle oder ähnliches handeln.

Da im gezeigten Beispiel die Hinweisschilder mit einem jeweiligen Pfeil, das heißt einer Hinweisrichtung, ausgestattet sind, umfasst der abgeleitete zweite Objektdatensatz ausgehend von einer jeweiligen erfassten Position 3a, 3b, 3c, 3d auch eine Richtung für das zweite Objekt 4, die Landmarke. So weist das auf der Straße a an Position 3a erfasste Hinweisschild einen Pfeil, also eine Richtungsangabe in positive x-Richtung, auf. Entsprechend weist auch das nächste Hinweisschild 2b eine Hinweisrichtung, vorliegend in negativer y-Richtung, auf. Das auf der Straße c in Position 3c erfasste erste Objekt 2c weist im gezeigten Beispiel einen Richtungshinweis in negativer x-Richtung auf. Das auf der Straße d an Position 3d erfasste erste Objekt 2d ist hier ein Hinweisschild auf die Landmarke mit einem Richtungsverweis in positiver y-Richtung.

Die zentrale Recheneinrichtung, der die genannten Informationen in Form der jeweiligen ersten und/oder zweiten Objektdatensätze zur Verfügung steht, kann nunmehr über die Gesetze der Logik ausschließen, dass sich das zweite Objekt 4, vorliegend die Landmarke, von der Straße a betrachtet in einer negativen x-Richtung befindet. Analoges gilt für die weiteren Straßen b, c, d, sodass die Recheneinrichtung ausschließen kann, dass sich das zweite Objekt 4 außerhalb des von den vier Straßen a, b, c, d eingegrenzten Gebietes auf der Landkarte 1 befindet. Die zentrale Recheneinrichtung kann also in einem entsprechenden Gebiet 5 der Landkarte 1 das zweite Objekt 4, vorliegend die Landmarke, einzeichnen. Da logischerweise das zweite Objekt 4 in diesem Fall auch jeweils über eine Straße mit den Positionen 3a, 3b, 3c und 3d verbunden ist, können auch weitere zweite Objekte 4a, 4b, 4c, 4d als Straßenverbindung zwischen den jeweiligen Positionen 3a, 3b, 3c, 3d und dem zweiten Objekt 4, hier der Landmarke, eingezeichnet werden.

Umfassen die erfassten ersten Objekte 2a, 2b, 2c, 2d, vorliegend die Hinweisschilder, zusätzlich noch Entfernungsangaben, wie dies beispielsweise in dem oben beschriebenen Anwendungsbeispiel der Fall ist, so kann über eine Trilateration in bekannter Weise die Position des zweiten Objekts 4 auf einen sehr kleinen räumlichen Bereich innerhalb des Gebiets 5 eingegrenzt werden und die Genauigkeit der Landkarte 1 nochmals erhöht werden. Um hier vorliegend eine Richtungsinformation der Wegweiser korrekt interpretieren zu können, kann ein weitere Wissen oder eine weitere Information erforderlich sein, beispielsweise ob es sich bei den Positionen 3a, 3b, 3c und 3d um eine Kreuzung oder um eine Ausfahrt handelt, da Wegweiser an Ausfahrten oft nur eine Richtung vorgeben, in welche zu fahren ist, um zu einem entsprechenden Ort zu gelangen, jedoch nicht die Himmelsrichtung, in welcher derjenige Ort liegt. So kann beispielsweise durch eine Unterführung nochmals ein Richtungswechsel in eine entgegengesetzte Richtung erfolgen. Bei einem Nicht-Berücksichtigen oder Nicht-Erfassen der entsprechenden Information kann eine fehlerhafte Karte oder ein Nicht-Aktualisieren oder nur teilweises Aktualisieren der Karte aufgrund fehlender Übereinstimmungen zwischen den Objektdatensätzen die Folge sein.

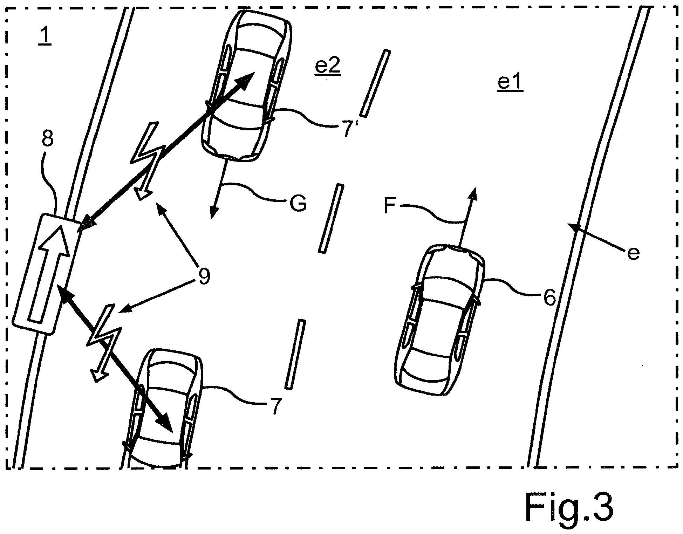

In Fig. 3 ist ein weiteres Anwendungsbeispiel für eine beispielhafte Ausführungsform eines Verfahrens zum Aktualisieren einer elektronischen Landkarte illustriert, welches nicht Teil der Erfindung ist. In der Landkarte 1 ist vorliegend eine Straße e eingezeichnet, welche von dem eigenen Kraftfahrzeug 6 auf einer ersten Fahrspur e1 in einer Fahrtrichtung F befahren wird. In der Landkarte 1 ist im gezeigten Beispiel die Straße e als Einbahnstraße hinterlegt, was durch das in der Fig. dargestellte Einbahnstraßenschild 8, welches hier kein reales Einbahnstraßenschild repräsentiert, symbolisiert ist.

Durch das eigene Kraftfahrzeug 6 werden im gezeigten Beispiel mehrere Kraftfahrzeuge 7 und 7' erfasst, welche sich auf der Straße e auf einer zweiten Fahrspur e2 in einer zu der Fahrtrichtung F des eigenen Kraftfahrzeugs 6 entgegengesetzten Fahrtrichtung G bewegen. Diese Fahrtrichtung ist vorliegend im Widerspruch zu der in der Landkarte 1 hinterlegten Verkehrsregelung, vorliegend der Einbahnstraßenregelung. Der Widerspruch ist vorliegend zur besseren Veranschaulichung des Sachverhalts durch Doppelpfeile und Blitze 9 symbolisiert.

Da jedoch das Erfassen der anderen Verkehrsteilnehmer 7, 7' und deren Verhalten, vorliegend das Fahren entgegengesetzt zu der Fahrtrichtung F, wiederholt erfolgt, kann darauf geschlossen werden, dass die entsprechende Verkehrsregelung, hier die Einbahnstraßenregelung, nicht mehr aktuell ist. Bei einem Verifizieren dieses Widerspruchs zwischen den in der Landkarte 1 hinterlegten Kartendaten mit der für die Straße e hinterlegten Eigenschaft als Einbahnstraße und dem als Eigenschaften von erfassten ersten Objekten hier erfassten Verhalten der weiteren Kraftfahrzeuge 7, 7' kann daraus geschlossen werden, dass die Verkehrsregelung geändert wurde und für die vorliegende Straße, die aktuell vom eigenen Kraftfahrzeug 6 befahrene Straße e nicht mehr gilt.

Entsprechend können die dem erfassten Verhalten widersprechenden Kartendaten von der Landkarte 1 durch die Recheneinrichtung entfernt werden und so die elektronische Landkarte 1 an aktuell geltende Verkehrsregeln angepasst werden. Dies ist gerade bei temporären Anpassungen, wie sie beispielsweise bei Baustellen, Festlichkeiten oder dergleichen erfolgen, vorteilhaft.

## Patentansprüche

1. Verfahren zum Aktualisieren einer elektronischen Landkarte (1), mit den Schritten:
- Erfassen von ersten Objekten (2a, 2b, 2c, 2d), welche eine jeweilige Hinweisrichtung für ein zweites Objekt (4, 4a, 4b, 4c, 4d) und eine jeweilige Entfernungsangabe umfassen, mittels einer jeweiligen Sensoreinrichtung durch ein oder mehrere Kraftfahrzeuge (6), sowie Zuordnen einer mittels einer Positionserfassungseinrichtung des jeweiligen Kraftfahrzeugs (6) erfassten Position (3a, 3b, 3c, 3d) des jeweiligen Kraftfahrzeugs (6) zum erfassten ersten Objekt (2a, 2b, 2c, 2d);
- Erzeugen jeweiliger erster Objektdatensätze, welche das jeweilige erfasste erste Objekt (2a, 2b, 2c, 2d) und die dem jeweiligen ersten Objekt (2a, 2b, 2c, 2d) zugeordnete Position (3a, 3b, 3c, 3d) repräsentieren, mittels einer Auswerteeinrichtung des jeweiligen Kraftfahrzeugs (6);
- Ableiten eines zweiten Objektdatensatzes, welcher das von den erfassten ersten Objekten (2a, 2b, 2c, 2d) verschiedene fahrzeugexterne zweite Objekt (4, 4a, 4b, 4c, 4d) repräsentiert, aus den ersten Objektdatensätzen;
- Aktualisieren der elektronischen Landkarte (1) durch Hinzufügen von dem zweiten Objektdatensatz entsprechenden Kartendaten zu der Landkarte (1) mittels einer Recheneinrichtung, wobei :
- der zweite Objektdatensatz zumindest eine Eigenschaft des zweiten Objekts (4, 4a, 4b, 4c, 4d) repräsentiert, welche nicht direkt durch das jeweilige Kraftfahrzeug (6) erfasst wird, und
- das zweite Objekt (4, 4a, 4b, 4c, 4d) eine Landmarke ist, und
- bei dem Aktualisieren als Kartendaten die noch nicht hinterlegte Landmarke der elektronischen Landkarte (1) hinzugefügt wird, wobei ein Bestimmen einer Position der Landmarke auf der elektronischen Landkarte (1) eine Trilateration unter Berücksichtigung der den ersten Objekten (2a, 2b, 2c, 2d) zugeordneten Positionen (3a, 3b, 3c, 3d), Hinweisrichtungen und Entfernungsangaben umfasst.

2. Verfahren nach Anspruch 1,
**dadurch gekennzeichnet, dass**
die Recheneinrichtung eine fahrzeugexterne Recheneinrichtung ist und vor dem Aktualisieren ein Übermitteln des ersten oder des zweiten Objektdatensatzes durch das jeweilige Kraftfahrzeug (6) an die fahrzeugexterne Recheneinrichtung erfolgt.

3. Verfahren nach Anspruch 2,
**dadurch gekennzeichnet, dass**
das Erfassen und Erzeugen wiederholt erfolgt, und insbesondere auch das Übermitteln wiederholt erfolgt, und dabei weitere Positionen mit weiteren ersten Objekten (2a, 2b, 2c, 2d) betreffen, durch das jeweilige Kraftfahrzeug (6), sowie insbesondere auch das Ableiten wiederholt erfolgt, welches dann erneut einen entsprechenden zweiten Objektdatensatz betrifft.

4. Verfahren nach Anspruch 3,
**dadurch gekennzeichnet, dass**
vor dem Aktualisieren der Landkarte (1) ein Überprüfen der jeweiligen ersten oder der jeweiligen zweiten Objektdatensätze durch die Recheneinrichtung auf eine Übereinstimmung erfolgt und das Aktualisieren nur erfolgt, wenn eine Übereinstimmung erkannt wird.

5. Verfahren nach Anspruch 4,
**dadurch gekennzeichnet, dass**
bei dem Überprüfen von zwei Objektdatensätzen eine Übereinstimmung erkannt wird, falls die Objektdatensätze sich auf das gleiche fahrzeugexterne Objekt (2a, 2b, 2c, 2d, 4, 4a, 4b, 4c, 4d) beziehen.

6. Verfahren nach Anspruch 4 oder 5,
**dadurch gekennzeichnet, dass**
für das Erkennen der Übereinstimmung bei dem Überprüfen ein neuronales Netz oder ein Bayessches Netz genutzt werden.

7. Verfahren nach Anspruch 4 oder 5 oder 6,
**dadurch gekennzeichnet, dass**
das Aktualisieren der Landkarte (1) nur erfolgt, falls bei dem Überprüfen für eine vorgegebene Mindestanzahl von Objektdatensätzen und/oder für Objektdatensätze einer vorgegebenen Mindestanzahl von unterschiedlichen Kraftfahrzeugen (6) eine Übereinstimmung erkannt wird.

8. Verfahren nach einem der Ansprüche 4 bis 7,
**dadurch gekennzeichnet, dass**
die Objektdatensätze auch einen jeweiligen Erfassungszeitpunkt des ersten Objekts (2a, 2b, 2c, 2d) repräsentieren, und das Aktualisieren der Landkarte (1) nur erfolgt, falls bei dem Überprüfen für eine vorgegebene Mindestanzahl von Objektdatensätzen mit Erfassungszeitpunkten in einem vorgegebenen Zeitintervall und/oder für Objektdatensätze mit Erfassungszeitpunkten in einem vorgegebenen Zeitintervall einer vorgegebenen Mindestanzahl von unterschiedlichen Kraftfahrzeugen (6) eine Übereinstimmung erkannt wird.

9. Verfahren nach einem der Ansprüche 2 bis 8,
**dadurch gekennzeichnet, dass**
das jeweilige Erfassen und Erzeugen, insbesondere auch das Ableiten und/oder Übermitteln, automatisch und insbesondere auch fortlaufend erfolgt.

10. Verfahren nach einem der vorhergehenden Ansprüche,
**dadurch gekennzeichnet, dass**,
falls bei dem Aktualisieren als Kartendaten eine noch nicht hinterlegte Landmarke der elektronischen Landkarte (1) hinzugefügt wird, ein Bestimmen einer Position der Landmarke auf der elektronischen Landkarte (1) ein logisches Ausschließen von für die Landmarke gemäß dem ersten und/oder zweiten Objektdatensatz unmöglichen Positionen umfasst.

11. System zum Aktualisieren einer elektronischen Landkarte (1), mit einer Flotte von Kraftfahrzeugen (6) sowie einer zentralen fahrzeugexternen Recheneinrichtung, wobei die Kraftfahrzeuge (6) ausgelegt sind, durch eine Positionserfassungseinrichtung des jeweiligen Kraftfahrzeugs (6) eine Position (3a, 3b, 3c, 3d) des jeweiligen Kraftfahrzeugs (6) und durch eine jeweilige Sensoreinrichtung des jeweiligen Kraftfahrzeugs (6) erste Objekte (2a, 2b, 2c, 2d), welche eine jeweilige Hinweisrichtung für ein zweites Objekt (4, 4a, 4b, 4c, 4d) und eine jeweilige Entfernungsangabe umfassen, zu erfassen, und dabei die jeweilige erfasste Position (3a, 3b, 3c, 3d) dem jeweiligen ersten Objekt (2a, 2b, 2c, 2d) zuzuordnen, sowie durch eine Auswerteeinrichtung des jeweiligen Kraftfahrzeugs (6) jeweilige erste Objektdatensätze zu erzeugen, welche das jeweilige erfasste erste Objekt (2a, 2b, 2c, 2d) und die dem jeweiligen ersten Objekt (2a, 2b, 2c, 2d) zugeordnete Position (3a, 3b, 3c, 3d) repräsentieren,
wobei
- die Auswerteeinrichtung des jeweiligen Kraftfahrzeugs (6) oder eine fahrzeugexterne Recheneinrichtung ausgelegt sind, aus den ersten Objektdatensätzen einen zweiten Objektdatensatz, welcher ein von den erfassten ersten Objekten (2a, 2b, 2c, 2d) verschiedenes fahrzeugexternes zweites Objekt (4, 4a, 4b, 4c, 4d) repräsentiert, abzuleiten;
- die Kraftfahrzeuge (6) ausgelegt sind, den ersten Objektdatensatz oder den zweiten Objektdatensatz an die fahrzeugexterne Recheneinrichtung zu übermitteln; und
- die Recheneinrichtung ausgelegt ist, die Landkarte (1) zu aktualisieren durch Hinzufügen von dem zweiten Objektdatensatz entsprechenden Kartendaten zu der Landkarte (1),
wobei:
- der zweite Objektdatensatz zumindest eine Eigenschaft des zweiten Objekts (4, 4a, 4b, 4c, 4d) repräsentiert, welche nicht direkt durch das jeweilige Kraftfahrzeug (6) erfasst wird, und
- das zweite Objekt (4, 4a, 4b, 4c, 4d) eine Landmarke ist, und
- die Recheneinrichtung ausgelegt ist, bei dem Aktualisieren als Kartendaten die noch nicht hinterlegte Landmarke der elektronischen Landkarte (1) hinzuzufügen, und ein Bestimmen einer Position der Landmarke auf der elektronischen Landkarte (1) durchzuführen, welche eine Trilateration unter Berücksichtigung der den ersten Objekten (2a, 2b, 2c, 2d) zugeordneten Positionen (3a, 3b, 3c, 3d), jeweiligen Hinweisrichtungen und jeweiligen Entfernungsangaben umfasst.

## Claims

1. Method for updating an electronic map (1), comprising the steps:
- detecting first objects (2a, 2b, 2c, 2d) which comprise a respective reference direction for a second object (4, 4a, 4b, 4c, 4d) and a respective distance specification, by means of a respective sensor device by one or more motor vehicles (6) and assigning a position (3a, 3b, 3c, 3d) of the respective motor vehicle (6) detected by means of a position detection device of the respective motor vehicle (6) to the detected first object (2a, 2b, 2c, 2d);
- producing respective first object datasets, which represent the respective detected first object (2a, 2b, 2c, 2d) and the position (3a, 3b, 3c, 3d) assigned to the respective first object (2a, 2b, 2c, 2d), by means of an evaluation device of the respective motor vehicle (6);
- deriving from the first object datasets a second object dataset which represents the second object (4, 4a, 4b, 4c, 4d) external to the vehicle different from the detected first objects (2a, 2b, 2c, 2d);
- updating the electronic map (1) by adding map data corresponding to the second object dataset to the map (1) by means of a computer device,
wherein:
- the second object dataset represents at least one property of the second object (4, 4a, 4b, 4c, 4d) which is not detected directly by the respective motor vehicle (6), and
- the second object (4, 4a, 4b, 4c, 4d) is a landmark and
- during the update as map data the not yet saved landmark is added to the electronic map (1), wherein determining a position of the landmark on the electric map (1) comprises trilateration, taking into consideration the positions (3a, 3b, 3c, 3d), reference directions and distance specifications assigned to the first objects (2a, 2b, 2c, 2d).

2. Method according to claim 1,
**characterised in that**
the computer device is a computer device external to the motor vehicle and before the update the first or the second object dataset is transmitted by the respective motor vehicle (6) to the computer device external to the vehicle.

3. Method according to claim 2,
**characterised in that**
the detection and production are repeated and in particular the transmission is also repeated, and relate to further positions with the further first objects (2a, 2b, 2c, 2d) by the respective motor vehicle (6) and in particular also the derivation is repeated which then again relates to a corresponding second object dataset.

4. Method according to claim 3,
**characterised in that**
before updating the map (1) the respective first or the respective second object data sets are checked by the computer device for a match and the update is only performed when a match is recognised.

5. Method according to claim 4,
**characterised in that**
when checking two object datasets a match is recognised if the object datasets relate to the same object (2a, 2b, 2c, 2d, 4, 4a, 4b, 4c, 4d) external to the motor vehicle.

6. Method according to claim 4 or 5,
**characterised in that**
a neuronal network or a Bayesian network are used for recognising the match during the checking.

7. Method according to claim 4 or 5 or 6,
**characterised in that**
the map (1) is only updated if a match is recognised when checking for a predefined minimum number of object datasets and/or for object datasets of a predefined minimum number of different motor vehicles (6).

8. Method according to any of claims 4 to 7,
**characterised in that**
the object datasets also represent a respective detection time of the first object (2a, 2b, 2c, 2d), and the map (1) is only updated if a match is recognised when checking for a predefined minimum number of object data sets with detection times in a predefined time interval and/or for object datasets with detection time points in a predefined time interval of a predefined minimum number of different motor vehicles (6).

9. Method according to any of claims 2 to 8,
**characterised in that**
the respective detection and production, in particular also derivation and/or transmission, is also performed automatically and in particular also continuously.

10. Method according to any of the preceding claims,
**characterised in that**
if during the update a not yet saved landmark is added as map data to the electronic map (1), determining a position of the landmark on the electronic map (1) comprises a logical exclusion of impossible positions for the landmark according to the first and/or second object dataset.

11. System for updating an electronic map (1), with a fleet of motor vehicles (6) and a central computer device external to the vehicle, wherein the motor vehicles (6) are configured by means of a position detection device of the respective motor vehicle (6) to detect a position (3a, 3b, 3c, 3d) of the respective motor vehicle (6) and by means of a respective sensor device of the respective motor vehicle (6) to detect first objects (2a, 2b, 2c, 2d) which comprise a respective reference direction for a second object (4, 4a, 4b, 4c, 4d) and a respective distance specification, and thereby assign the respective detected position (3a, 3b, 3c, 3d) to the respective first object (2a, 2b, 2c, 2d), and by means of an evaluation device of the respective motor vehicle (6) to produce respective first object datasets which represent the respective first detected object (2a, 2b, 2c, 2d) and the position (3a, 3b, 3c, 3d) assigned to the first object (2a, 2b, 2c, 2d),
wherein
- the evaluation device of the respective motor vehicle (6) or a computer device external to the vehicle are configured to derive from the first object datasets a second object dataset which represents a second object (4, 4a, 4b, 4c, 4d) external to the vehicle different from the detected first objects (2a, 2b, 2c, 2d);
- the motor vehicles (6) are configured to transmit the first object dataset or the second object dataset to the computer device external to the motor vehicle and
- the computer device is configured to update the map (1) by adding map data to the map (1) corresponding to the second object dataset,
wherein:
- the second object dataset represents at least one property of the second object (4, 4a, 4b, 4c, 4d), which not detected directly by the respective motor vehicle (6) and
- the second object (4, 4a, 4b, 4c, 4d) is a landmark, and
- the computer device is configured, during the update to add as map data the not yet saved landmark of the electronic map (1) and to determine a position of the landmark on the electronic map (1), which comprises trilateration taking into consideration the positions (3a, 3b, 3c, 3d) assigned to the first objects (2a, 2b, 2c, 2d), respective reference directions and respective distance specifications.

## Revendications

1. Procédé de mise à jour d'une carte géographique électronique (1) comportant les étapes suivantes :
- détection de premiers objets (2a, 2b, 2c, 2d) qui comprennent une orientation indicative respective pour un second objet (4, 4a, 4b, 4c, 4d) et une indication d'éloignement respective, au moyen d'un dispositif capteur respectif par un ou plusieurs véhicules à moteur (6), ainsi que l'affectation d'une position (3a, 3b, 3c, 3d) du véhicule à moteur respectif (6) détectée au moyen d'un dispositif de détection de position du véhicule à moteur respectif (6) au premier objet détecté (2a, 2b, 2c, 2d) ;
- génération de premiers ensembles de données d'objet respectifs qui représentent le premier objet détecté respectif (2a, 2b, 2c, 2d) et la position (3a, 3b, 3c, 3d) affectée au premier objet respectif (2a, 2b, 2c, 2d), au moyen d'un dispositif d'évaluation du véhicule à moteur respectif (6) ;
- obtention d'un second ensemble de données d'objet qui représente le second objet (4, 4a, 4b, 4c, 4d) externe au véhicule, différent des premiers objets détectés (2a, 2b, 2c, 2d), à partir des premiers ensembles de données d'objet :
- mise à jour de la carte géographique électronique (1) en ajoutant à la carte géographique (1) des données cartographiques correspondant au second ensemble de données d'objet au moyen d'un dispositif de calcul, dans lequel :
- le second ensemble de données d'objet représente au moins une propriété du second objet (4, 4a, 4b, 4c, 4d) qui n'est pas détectée directement par le véhicule à moteur respectif (6), et
- le second objet (4, 4a, 4b, 4c, 4d) est un repère, et
- lors de la mise à jour, le repère non encore enregistré de la carte géographique électronique (1) est ajouté en tant que données cartographiques, dans lequel une détermination d'une position du repère sur la carte géographique électronique (1) comprend une trilatération prenant en compte les positions (3a, 3b, 3c, 3d) affectées aux premiers objets (2a, 2b, 2c, 2d), des orientations indicatives et des données d'éloignement.

2. Procédé selon la revendication 1,
**caractérisé en ce que**
le dispositif de calcul est un dispositif de calcul externe au véhicule et avant la mise à jour, une transmission du premier ou du second ensemble de données d'objet s'effectue par le véhicule à moteur respectif (6) au dispositif de calcul externe au véhicule.

3. Procédé selon la revendication 2,
**caractérisé en ce que**
la détection et la génération s'effectuent de façon répétée, et en particulier la transmission s'effectue également de façon répétée par le véhicule à moteur respectif (6), et concernent à cet égard d'autres positions avec d'autres premiers objets (2a, 2b, 2c, 2d), de même en particulier l'obtention s'effectue également de façon répétée, ce qui concerne alors à nouveau un second ensemble de données d'objet correspondant.

4. Procédé selon la revendication 3,
**caractérisé en ce que**
avant la mise à jour de la carte géographique (1), une vérification de la concordance des premiers ensembles respectifs ou des seconds ensembles respectifs de données d'objet s'effectue par le dispositif de calcul et la mise à jour ne s'effectue que lorsqu'une concordance est identifiée.

5. Procédé selon la revendication 4,
**caractérisé en ce que**
lors de la vérification de deux ensembles de données d'objet, une concordance est identifiée dans le cas où les ensembles de données d'objet se rapportent au même objet (2a, 2b, 2c, 2d, 4, 4a, 4b, 4c, 4d) externe au véhicule.

6. Procédé selon la revendication 4 ou 5,
**caractérisé en ce que**
pour l'identification de la concordance lors de la vérification, un réseau neuronal ou un réseau bayésien est utilisé.

7. Procédé selon la revendication 4 ou 5 ou 6,
**caractérisé en ce que**
la mise à jour de la carte géographique (1) ne s'effectue que dans le cas où lors de la vérification pour un nombre minimal prédéterminé d'ensembles de données d'objet et/ou pour des ensembles de données d'objet d'un nombre minimal prédéterminé de véhicules à moteur (6) différents, une concordance est identifiée.

8. Procédé selon l'une quelconque des revendications 4 à 7,
**caractérisé en ce que**
les ensembles de données d'objet représentent également un moment de détection respectif du premier objet (2a, 2b, 2c, 2d), et la mise à jour de la carte géographique (1) ne s'effectue que dans le cas où lors de la vérification pour un nombre minimal prédéterminé d'ensembles de données d'objet avec des moments de détection dans un intervalle temporel prédéterminé et/ou pour des ensembles de données d'objet avec des moments de détection dans un intervalle temporel prédéterminé d'un nombre minimal prédéterminé de véhicules à moteur (6) différents, une concordance est identifiée.

9. Procédé selon l'une quelconque des revendications 2 à 8,
**caractérisé en ce que**
la détection et la génération respectives, en particulier également l'obtention et/ou la transmission s'effectuent de façon automatique et en particulier également, de façon continue.

10. Procédé selon l'une quelconque des revendications précédentes,
**caractérisé en ce que**
dans le cas où lors de la mise à jour un repère non encore enregistré de la carte géographique électronique (1) est ajouté en tant que données cartographiques, une détermination d'une position du repère sur la carte géographique électronique (1) comprend une exclusion logique de positions impossibles pour le repère conformément au premier et/ou au second ensemble de données d'objet.

11. Système de mise à jour d'une carte géographique électronique (1) avec une flotte de véhicules à moteur (6) ainsi qu'un dispositif de calcul central externe au véhicule, dans lequel les véhicules à moteur sont conçus pour détecter par un dispositif de détection de position du véhicule à moteur (6) respectif, une position (3a, 3b, 3c, 3d) du véhicule à moteur (6) respectif et par un dispositif capteur respectif du véhicule à moteur (6) respectif, des premiers objets (2a, 2b, 2c, 2d) qui comprennent une orientation indicative respective pour un second objet (4, 4a, 4b, 4c, 4d) et une indication d'éloignement respective, et à cet égard, pour affecter la position détectée respective (3a, 3b, 3c, 3d) au premier objet respectif (2a, 2b, 2c, 2d) ainsi que pour générer par un dispositif d'évaluation du véhicule à moteur (6) respectif, des premiers ensembles de données d'objet respectifs qui représentent le premier objet détecté respectif (2a, 2b, 2c, 2d) et la position (3a, 3b, 3c, 3d) affectée au premier objet respectif (2a, 2b, 2c, 2d),
dans lequel
- le dispositif d'évaluation du véhicule à moteur (6) respectif ou un dispositif de calcul externe au véhicule sont conçus pour obtenir à partir des premiers ensembles de données d'objet un second ensemble de données d'objet qui représente un second objet (4,4a, 4b, 4c, 4d) externe au véhicule différent du premier objet détecté (2a, 2b, 2c, 2d) ;
- les véhicules à moteur (6) sont conçus pour transmettre le premier ensemble de données d'objet ou le second ensemble de données d'objet au dispositif de calcul externe au véhicule ; et
- le dispositif de calcul est conçu pour mettre à jour la carte géographique (1) par l'ajout à la carte géographique (1) de données cartographiques correspondant au second ensemble de données d'objet,
dans lequel :
- le second ensemble de données d'objet représente au moins une propriété du second objet (4, 4a, 4b, 4c, 4d) qui n'est pas détectée directement par le véhicule à moteur respectif (6), et
- le second objet (4, 4a, 4b, 4c, 4d) est un repère, et
- le dispositif de calcul est conçu pour ajouter, lors de la mise à jour, le repère non encore enregistré de la carte géographique électronique (1) en tant que données cartographiques, et pour réaliser une détermination d'une position du repère sur la carte géographique électronique (1) qui comprend une trilatération prenant en compte les positions (3a, 3b, 3c, 3d) affectées aux premiers objets (2a, 2b, 2c, 2d), des orientations indicatives respectives et des données d'éloignement respectives.
